# EUROPEAN PATENT APPLICATION

(11) **EP 1 130 916 A2**
(43) Date of publication of application: **05.09.2001**
(21) Application number: 01105073.9
(22) Date of filing: 02.03.2001
(51) Int. Cl.: H04N 5/913

(54) **Recording and reproducing apparatus**

(30) Priority: 03.03.2000 JP 2000058441
(71) Applicant: MATSUSHITA ELECTRIC INDUSTRIAL CO., LTD., Kadoma-shi, Osaka 571-8501 (JP)
(72) Inventor: Nomura, Yasuhiro, Hirakata-shi, Osaka 573-0087 (JP)
(74) Representative: Balsters, Robert

(57) **Abstract**

A recording and reproducing apparatus transmits copy generation management information to a second recording and reproducing apparatus connected thereto even when receiving, recording or reproducing a program not accompanied by video, e.g. an audio program of music only or a data program, sent from a broadcasting station. In the recording and reproducing apparatus, an elementary stream (ES) signal judging unit judges whether the video signal is contained in the received signal or not. When video signal is not contained, a controller controls a video signal generator to generate a video signal.

## Description

### FIELD OF THE INVENTION

The present invention relates to a recording and reproducing apparatus controlling to copy between recording and reproducing apparatuses by transmitting copy generation management information when recording.

### BACKGROUND OF THE INVENTION

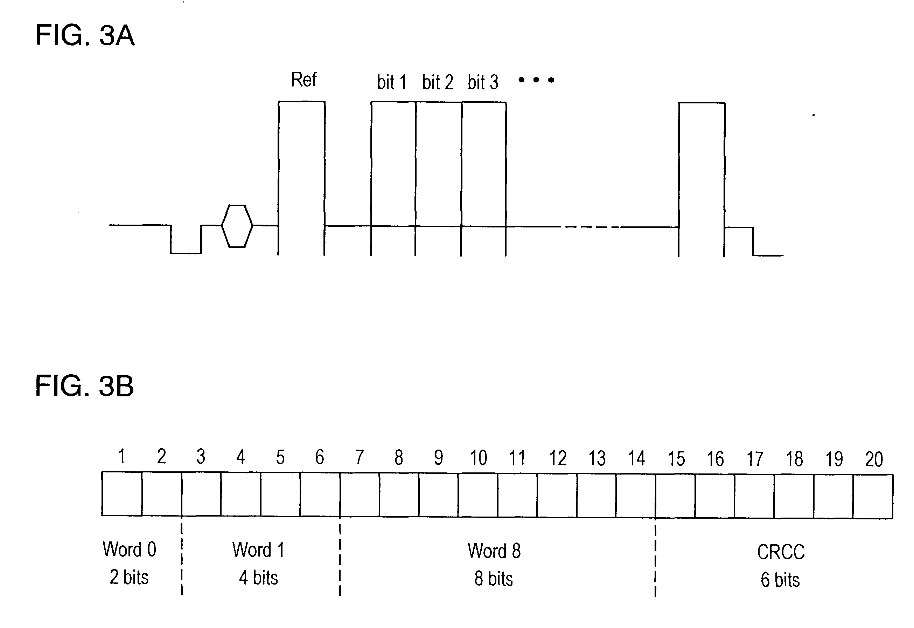

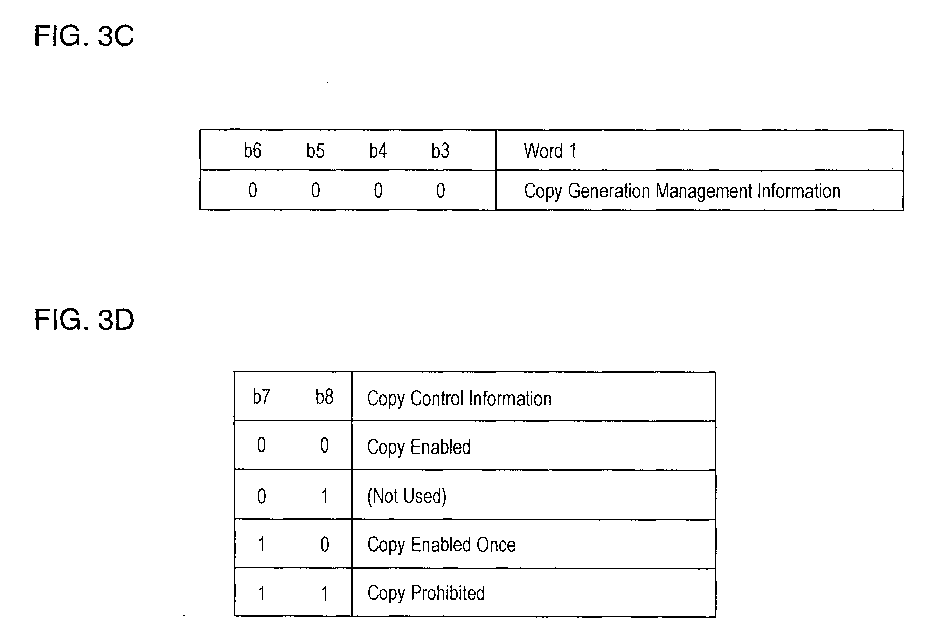

Recently, a digital broadcast has started through a communication satellite (CS). After 2000, a broadcast through a broadcast satellite (BS) and ground waves will be successively shifted from analog to digital. In the digital broadcast, copy generation management information which shows whether the broadcast program is allowed to be recorded or not is added and sent out together with video, audio and data broadcast. A digital recording apparatus records the broadcast according to the copy generation management information sent out from the broadcasting station. When the recording medium is reproduced, the copy generation management information called Copy Generation Management System-Analog (CGMS-A) is issued. With this information, it is managed whether or not the recording (dubbing) is possible in a digital recording apparatus of the second or later generation. Figs. 3A through 3D are schematic diagrams showing the signal composition of copy generation management information designated to TRC0011, the copy generation control system of consumer-use digital video recorder. Fig. 3A shows a signal waveform having copy generation management information multiplexed, as an identification signal, on the luminance signal of an analog video signal at the 20th and 283rd horizontal lines in the vertical retrace time. Fig. 3B shows the relation between each bit and each word. Fig. 3C shows the content of bits in word 1 of the copy generation management information. Fig. 3D shows the content of bit 7 and bit 8 in each mode of the copy generation management information.

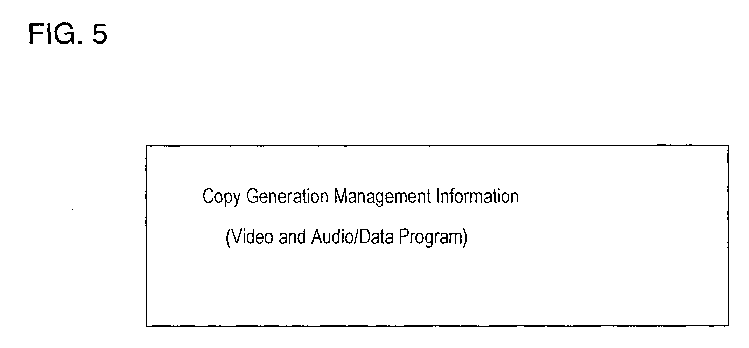

The operation of the copy generation management in a conventional digital recording apparatus will be explained below by referring to the accompanying drawings. In the digital broadcast, as shown in Fig. 5, the program can be sent out with adding copy generation management information to entire program showing whether the program is allowed to be recorded or not.

When the digital broadcast is received and recorded, copy generation management information is multiplexed and issued as an identification signal at the 20th an 283rd horizontal lines in the vertical retrace time of the luminance signal of an analog video signal shown in Fig. 3A. The digital recording apparatus judges whether the received analog video signal can be recorded or not by referring to the copy generation management information.

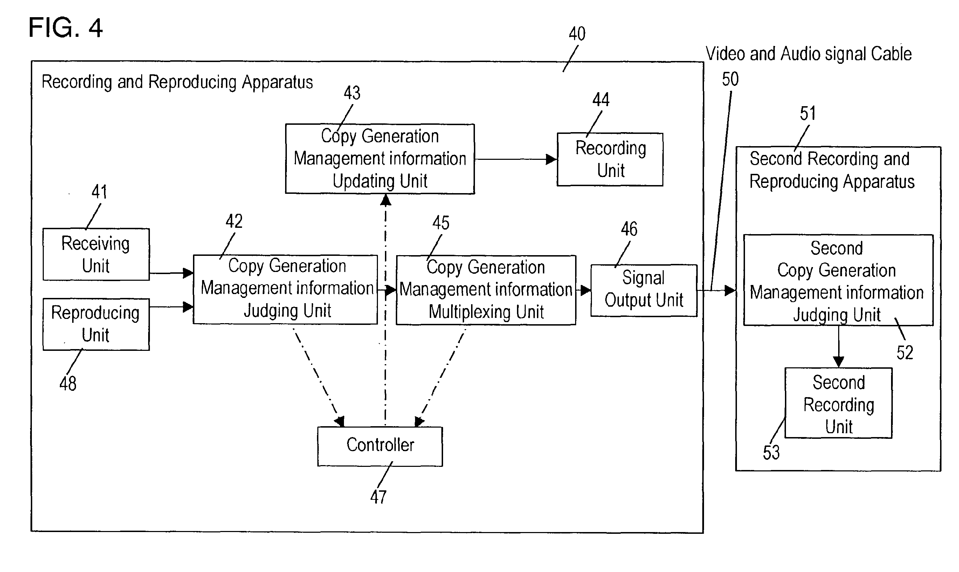

Fig. 4 is a block diagram of a conventional recording and reproducing apparatus. A recording and reproducing apparatus 40 such as digital VTR can record and reproduce a received digital broadcast. A receiving unit 41 receives the digital broadcast. A copy-generation-management-information-judging unit 42 judges the copy generation management information which is transmitted from the broadcasting station together with the program or which is issued when the program recorded in a tape is reproduced. A recording unit 44 records the copy generation management information in a copy-generation-management-information-storage region of a recording medium together with video and audio signals when recording. A copy-generation-management-information-updating unit 43 updates the copy generation management information showing the program permitted to be recorded only once when recording the program transmitted from the broadcasting station in the recording and reproducing apparatus. A reproducing unit 48 reproduces the recorded tape. A controller 47 permits or prohibits the program from being recorded based on the result of judging the copy generation management information, which is transmitted from the broadcasting station, in the judging unit 42, and gives a copy generation management information to be multiplexed in a copy-generation-management-information-multiplexing unit 45. The multiplexing unit 45 multiplexes the copy generation management information from the controller 47 in the 20th and 283rd horizontal lines in the vertical retrace time of the luminance signal of an analog video signal. A signal output unit 46 delivers video and audio signals.

A second recording and reproducing apparatus 51 such as digital recording and reproducing apparatus is coupled to the signal output unit 46 by a connection cable 50 for video and audio signals. A second copy generation management information judging unit 52 judges the copy generation management information multiplexed and recorded in the 20th and 283rd horizontal lines in the vertical retrace time of the luminance signal of an analog video signal. Further, the recording and reproducing apparatus includes a second recording unit 53.

The copy generation management of the conventional recording and reproducing apparatus having such configuration will be explained. Programs of digital broadcast are selected in the receiving unit 41. And the copy generation management information judging unit 42 acquires and judges the copy generation management information of the program, as shown in Fig. 3A, and then sends the result of the judging to the controller 47. If the result of the judging of the copy generation management information of the program is prohibited from being recorded, in Fig. 3D, the bits 7, 8 of copy control information are both set to "1". Hereinafter, this state is expressed by "copy control information = 11." In this case, the controller 47 functions to prohibit the recording. If the result of the judging at the judging unit 42 permits the digital recording only once, that is, if the copy control information is "10", the controller 47 updates the copy generation management information with the copy-generation-management-information-updating unit 43 during digitally-recording the program. And then, the program is recorded in the recording unit 44. That is, if the copy control information is "10" during the receiving of the program, the information is updated into "11", which means "copy disabled" when the recording of the program, and then the second and subsequent recording is prohibited. The copy generation management information updated at the updating unit 43 is written in the copy-generation-management-information-storage region on the recording medium by the recording unit 44 together with the video and audio signals and data of the received program. When they are reproduced in the reproducing unit 48, the copy generation management information written in the storage region on the recording medium is judged in the judging unit 42. The result of the judging is detected by the controller 47, and then, the copy-generation-management-information-multiplexing unit 45 multiplexes the copy generation management information, which is issued through the signal output unit 46. The output signal is issued, as shown in Fig. 3A, as the copy generation management information is multiplexed in the 20th and 283rd horizontal lines in the vertical retrace of the luminance signal of an analog video signal.

In consequence, in the second recording and reproducing apparatus 51 such as digital recording and reproducing apparatus coupled to the recording and reproducing apparatus 40 with the video and audio signal cable 50, the copy generation management information contained in the luminance signal of the video signal issued from the signal output unit 46 is judged in the second copy-generation-management-information-judging unit 52. The judging unit 52 judges whether the video signal is allowed to be recorded or not. If the copy control information is "00" (copy enabled) or "10" (copy enabled once), the second recording unit 53 can record the output signal.

On the other hand, when the recording and reproducing apparatus 40 records the program which is allowed to be recorded only once according to the copy generation management information, the copy-generation-management-information-updating unit 43 updates the copy control information of "10" (copy enabled once) to that of "11" (copy disabled) and stores it in the copy-control-information-storage region (not shown) on the recording medium. When this recording medium is reproduced by the reproducing unit 48, the copy-generation-management-information-judging unit 42 judges the management information in the storage region on the recording medium and transmits it to the controller 47. The controller 47 detects that the copy control information of the reproduced recording medium is "11" (copy disabled). The signal of the copy control information of "11" is multiplexed on the video signal in the copy-generation-management-information-multiplexing unit 45 and is issued through the signal output unit 46. The output signal waveform issued as the copy generation management information is shown in Fig. 3A.

As a result, even if the second recording and reproducing apparatus 51 coupled to the apparatus 40 attempts to record the signal reproduced in the apparatus 40, the signal cannot be recorded because the second copy-generation-management-information judging unit 52 detects the copy control information of "11" (copy disabled).

In the conventional apparatus, the copy generation management information is multiplexed on the video signal. Therefore, in the case that the program not accompanied by a video signal, e.g. an audio music program or a data program, is received and recorded with the conventional apparatus, the copy generation management information cannot be stored in the copy-control-information-storage region on the recording medium. And therefore, As the second recording and reproducing apparatus cannot hence judge the copy generation management information, the program can be recorded, and the copy generation cannot thus be managed.

### SUMMARY OF THE INVENTION

A recording and reproducing apparatus capable of transmitting copy generation management information to a second recording and reproducing apparatus coupled thereto even if the program not accompanied by a video signal from a broadcasting station is received, recorded, and reproduced.

The recording and reproducing apparatus comprises:
(a) a receiving unit for receiving digital broadcast transmitted from a broadcasting station;
(b) a reproducing unit for reproducing a recording medium;
(c) a copy-generation-management-information-judging unit for judging the copy generation management information included in the output from the receiving unit or the reproducing unit;
(d) an elementary stream (ES) signal judging unit for judging whether a video signal is contained in the output from the receiving unit or reproducing unit or not;
(e) a video signal generator generating a video signal based on the output of the ES signal judging unit;
(f) a copy-generation-management-information-multiplexing unit for multiplexing the output of the judging unit on the output of the video signal generator;
(g) a signal output unit for issuing the signal of the multiplexing unit;
(h) a copy-generation-management-information-updating unit capable of updating the copy generation management information when recording; and
(i) a recording unit recording the output of the updating unit.

In this configuration, even when the program not accompanied with a video signal, e.g. an audio program of music program only or a data program sent out in digital broadcast, is received, recorded, and reproduced, the copy generation management information can be transmitted to the connected recording apparatus. The ES signal judging unit judges whether or not the video signal is contained in the received signal when receiving or reproducing. When the ES signal judging unit judges that the received signal consists of audio and data only but not containing the video signal, the video signal generator generates a video signal showing that the signal is composed of audio and data broadcast only by, e.g. on-screen display. When the receiving and the reproducing, the copy generation management information is multiplexed and issued at the 20th and 283rd horizontal lines in the vertical retrace time of the luminance signal of an analog video signal.

### BRIEF DESCRIPTION OF THE DRAWINGS

Fig. 1 is a block diagram showing a configuration of a recording and reproducing apparatus according to embodiment 1 of the invention.

Fig. 2 is a schematic diagram of copy generation management information output when receiving and reproducing an audio program according to embodiment 1.

Figs. 3A through 3D are schematic diagrams showing a signal composition of copy generation management information.

Fig. 4 is a block diagram showing a configuration of a conventional recording and reproducing apparatus.

Fig. 5 is a schematic diagram of copy generation management information output when receiving, recording and reproducing.

### DESCRIPTION OF THE PREFERRED EMBODIMENT

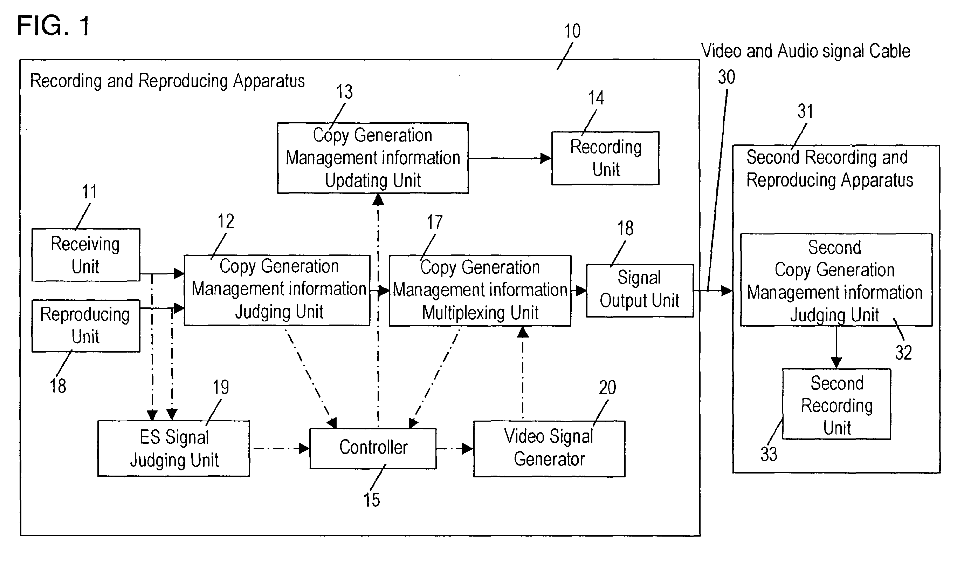

An embodiment of the invention is described below while referring to Fig. 1.

### (Embodiment 1)

Fig. 1 is a block diagram of a recording and reproducing apparatus according to embodiment 1 of the invention. A recording and reproducing apparatus 10 such as digital VTR receives digital broadcast, and records and reproduces it. A receiving unit 11 receives the digital broadcast. A copy-generation-management-information-judging unit 12 judges the copy generation management information transmitted from a broadcasting station or reproduced from a recording tape. A recording unit 14 records the copy generation management information in a copy-generation-management-information-storage region of a recording medium together with video and audio signals at the recording. A copy-generation-management-information-updating unit 13 updates the copy generation management information transmitted from the broadcasting station with the program having the video and audio signals if the program is permitted to be recorded only once, when recording the program in the recording and reproducing apparatus 10. A reproducing unit 16 reproduces a recording tape. A controller 15 permits or prohibits the program from being recorded according to the result of the judging of the copy generation management information transmitted from the broadcasting station in the judging unit 12. Further, the controller 15 generates the copy generation management information to be multiplexed in a copy-generation-management-information-multiplexing unit 17. An elementary stream (ES) signal judging unit 19 judges whether or not a video signal is contained in the signal at the receiving and the reproducing. A video signal generator unit 20 issues data for an on-screen display. The multiplexing unit 17 multiplexes the copy generation management information from the controller 15 at the 20th and 283rd horizontal lines in the vertical retrace time of the luminance signal of an analog video signal. A signal output unit 18 issues the video and audio signals. A second recording and reproducing apparatus 31 such as digital recording apparatus is coupled to the recording and reproducing apparatus 10 with a connection cable 30. The recording and reproducing apparatus 31 comprises: a second-copy-generation-management-information-judging unit 32 for judging the copy generation management information recorded at the 20th and 283rd horizontal lines in the vertical retrace time of the luminance signal of an analog video signal; and a recording unit 33.

The operation of the recording and reproducing apparatus having such configuration will be explained by referring to Fig. 1.

First, a program of digital broadcast is selected in the receiving unit 11, and the copy-generation-management-information-judging unit 12 acquires and judges the copy generation management information of the program as shown in Fig. 5. If the copy generation management information judged in the copy-generation-management-information-judging unit 12 prohibits the program from being recorded, i.e., the copy control information of "11", the controller 15 functions to prohibit the recording. If a program permitted digitally recording only once, i.e, a program having the copy control information of "10" (copy enabled once), is received, the controller 15 makes the copy-generation-management-information-updating unit 13 update the copy control information of "10" to that of "11" (copy disabled) at the digitally recording of the program. And the recording unit 14 can record it.

When the program which can be recorded, for example, only once in the recording and reproducing apparatus 10 contains video and audio signals, i.e., when the copy control information is set to "10", the copy-generation-management-information-updating unit 13 updates the copy control information of "10" to "11" (copy disabled) at the digitally recording, and the program is thus recorded in the recording unit 14. The copy generation management information is written in the copy-generation-management-information-storage region on the recording medium, simultaneously with the video and audio signals of the program received in the recording unit 14. When the reproducing unit 16 reproduces it, the ES signal judging unit 19 detects that the video signal is contained in the reproduced signal. When the video signal is contained in the reproduced signal, the copy-generation-management-information-judging unit 12 judges the copy generation management information written in the copy-generation-management-information-storage region on the recording medium and sends the result of the judging to the controller 15. The controller 15 makes the copy-generation-management-information-multiplexing unit 17 multiplex and record the copy generation management information and issues the multiplexed signal through the signal output unit 18.

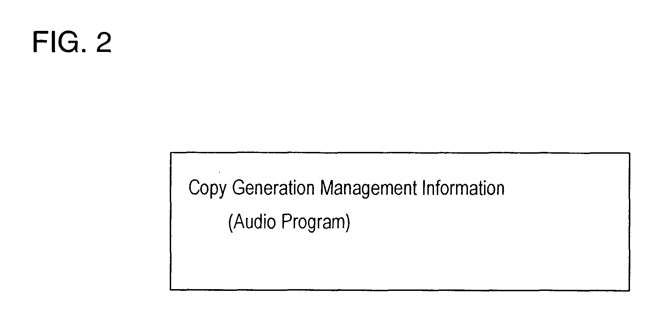

Fig. 2 is a schematic diagram of copy generation management information output when receiving and reproducing an audio program according to embodiment 1. On the output signal, the copy generation management information is multiplexed as an identification signal at the 20th and 283rd horizontal lines in the vertical retrace time of the luminance signal of an analog video signal.

Receiving this video signal, the second recording and reproducing apparatus 31 such as digital recording apparatus judges the copy generation management information contained in the luminance signal of the analog video signal in the second copy-generation-management-information-judging unit 32. If the recording is permitted, i.e., if the copy control information is set to "00" (copy enabled) or "10" (copy enabled once), the second recording unit 33 can record the video signal. On the other hand, when a program which can be recorded only once is recorded in the recording and reproducing apparatus 10, the copy generation management information updating unit 13 updates the copy control information of "10" (copy enabled once) to that of "11" (copy disable) at the recording. And the updating unit 13 store it in the copy-control-information-storage region on a recording medium. When the recording medium is reproduced, the copy-generation-management-information-judging unit 12 judges data in the storage region on the recording medium at the reproducing. Since the copy control information of "11" (copy disabled) is recorded in the copy-generation-management-information-multiplexing unit 17, the second recording and reproducing apparatus 31 cannot record the video signal.

When an audio signal or a data broadcast not accompanied by video signal is received in the receiving unit 11, at the recording of it, the copy-generation-management-information-judging unit 12 obtains and judges the copy generation management information of the program as shown in Fig. 2. The result of the judging is sent to the controller 15. When the copy generation management information permits the digital recording only once, i.e., when receiving the copy control information of "10" (copy enabled once), the controller 15 makes the copy-generation-management-information-updating unit 13 update the copy control information of "10" (copy enabled once) to that of "11" (copy disabled) at the digital recording of the program. And the conteller allows the recording unit 14 to record the program.

The copy generation management information is written into the copy-generation-management-information-storage region on a recording medium together with the received audio program in the recording unit 14. When the reproducing unit 16 reproduces the recorded audio program, the ES signal judging unit 19 judges whether or not a video signal is contained in the signal from the reproducing unit 16. When reproducing the signal composed of only an audio signal, the ES signal judging unit 19 detects and notices that to the controller 15. The controller 15 detects that a video signal is not contained in the reproduced signal, and then, the video signal generatoer 20 generates an image displaying that the program is composed of only an audio signal, for example, a video signal showing audio program by on-screen display. Further, the controller 15 combines the copy generation management information obtained through the copy-generation-management-information-judging unit 12 and the video signal issued from the video signal generator 20 in the copy-generation-management-information-multiplexing unit 17. And then, the controller allows the multiplexed signal to be issued through the signal output unit 18.

In this recording and reproducing apparatus, if the reproduced program contains only an audio signal not accompanied by a video signal, the video signal generator 20 generates a video signal simultaneously reproduces the audio signal. And the copy-generation-management-information-multiplexing unit 17 multiplexes the copy generation management information on the video signal. As shown in Fig. 3A, the copy generation management information is multiplexed and issued on the 20th and 283rd horizontal lines in the vertical retrace time of the luminance signal of an analog video signal. In consequence, receiving the video signal, the second copy-generation-management-information-judging unit 32 of the second recording and reproducing apparatus 31 judges the copy generation management information contained in the luminance signal of analog video signal. If the program can be recorded, i.e., if the copy control information is set to "00" (copy enabled) or "10" (copy enabled once), the second recording unit 33 can record it.

In the above explanation, the recording and reproducing apparatus comprises the receiving unit 11. However, the receiving unit 11 may be incorporated in other apparatuses and connected to the recording and reproducing apparatus through an IEEE1394 interface. Even in that case, the recording and reproducing apparatus can detect whether the video signal is contained in the received signal or not and issue the copy generation management information.

## Claims

1. A recording and reproducing apparatus comprising:
a receiving unit for receiving digital broadcast transmitted from a broadcasting station;
a reproducing unit for reproducing a recording medium;
a copy-generation-management-information-judging unit for judging the copy generation management information included in an output of at least one of said receiving unit and said reproducing unit;
an elementary stream (ES) signal judging unit for judging whether a video signal is contained in an output of at least one of said receiving unit and said reproducing unit;
a video signal generator generating a video signal based on an output of said ES signal judging unit;
a copy-generation-management-information-multiplexing unit for multiplexing outputs of said copy-generation-management-information-judging unit and said video signal generator;
a signal output unit for issuing an output of said copy-generation-management-information-multiplexing unit;
a copy-generation-management-information-updating unit for updating the copy generation management information; and
a recording unit recording an output of said copy-generation-management-information-updating unit.
